(19) Europäisches Patentamt / European Patent Office / Office européen des brevets

(11) **EP 4 476 182 B1**

(12) **EUROPEAN PATENT SPECIFICATION**

(45) Date of publication and mention
of the grant of the patent:
**10.09.2025   Bulletin 2025/37**

(21) Application number: **23709268.9**

(22) Date of filing: **09.02.2023**

(51) International Patent Classification (IPC):
*C02F 9/00* (2023.01)        *C02F 1/28* (2023.01)
*C02F 1/44* (2023.01)        *C02F 1/66* (2023.01)
*C02F 1/72* (2023.01)        *C02F 101/10* (2006.01)
*C02F 101/16* (2006.01)      *C02F 103/22* (2006.01)

(52) Cooperative Patent Classification (CPC):
**C02F 9/00;** C02F 1/283; C02F 1/441; C02F 1/66;
C02F 1/722; C02F 2101/101; C02F 2101/16;
C02F 2103/22; Y02A 20/131

(86) International application number:
**PCT/IB2023/051171**

(87) International publication number:
**WO 2023/152676 (17.08.2023 Gazette 2023/33)**

(54) **PROCESS FOR THE TREATMENT OF WATERS CONTAINING AMMONIA**

VERFAHREN ZUR BEHANDLUNG VON AMMONIAK ENTHALTENDEN WÄSSERN

PROCÉDÉ DE TRAITEMENT D'EAUX CONTENANT DE L'AMMONIAC

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **11.02.2022   IT 202200002585**

(43) Date of publication of application:
**18.12.2024   Bulletin 2024/51**

(73) Proprietor: **Sicit Group S.p.A.
36072 Chiampo VI (IT)**

(72) Inventors:
• **CATTAZZO, Alberto
37030 COLOGNOLA AI COLLI (VR) (IT)**
• **NERESINI, Massimo
36078 VALDAGNO (VI) (IT)**
• **PAVAN, Andrea
36078 VALDAGNO (VI) (IT)**
• **RUMIGNANI, Alberto
36078 VALDAGNO (VI) (IT)**

(74) Representative: **Bianchetti & Minoja with
Trevisan & Cuonzo IPS SRL
Via Plinio, 63
20129 Milano (IT)**

(56) References cited:
**EP-A1- 3 819 019        WO-A1-2020/146941
US-A1- 2009 261 039**

• **MASSE L. ET AL: "Effect of pH level and acid
type on total ammoniacal nitrogen (TAN)
retention and fouling of reverse osmosis
membranes processing swine wastewater", vol.
50, no. 4, 11 November 2015 (2015-11-11), CA,
pages 297 - 304, XP055949933, ISSN: 1201-3080,
Retrieved from the Internet <URL:https://
iwaponline.com/wqrj/article-pdf/50/4/297/378921/
wqrjc0500297.pdf> [retrieved on 20220808], DOI:
10.2166/wqrjc.2015.143**

## Description

### Technical field of the Invention

The present invention relates to a process for the treatment of waters containing ammonia, also referred to as ammonia condensed waters, aimed to the reuse thereof.

### Background

The condensed waters deriving from industrial productive processes, for example a production process of a protein hydrolysate of animal origin, are characterized by the presence of ammonia nitrogen and possibly trace sulphides.

It is therefore necessary to treat such ammonia condensed waters to recover ammonium bicarbonate, to be reused within production processes, and to obtain purified water, which may in turn be used, for example, as cooling water for cooling towers or for steam production.

According to known methods, the ammonia nitrogen can be removed from the condensed water characterized by a basic pH by acidification with sulphuric acid ($H_2SO_4$) to form ammonium sulphate ($(NH_4)_2SO_4$). The thus prepared water may be treated with a reverse osmosis plant. The document WO 2020/146941 A1 discloses a method for removing ammonia from wastewater by adding carbon dioxide or sulfuric acid into the liquid fraction of the wastewater before evaporation and treatment of the such obtained distillate by revers osmosis.

Anyway, the acidification with $H_2SO_4$ has some drawbacks, such as:

a) the retentate consists of an ammonium sulphate solution, which cannot be reused in industrial productive processes, for example for the production of a protein hydrolysate, and therefore it must necessarily be disposed; further, when sulphides are present in the condensed water,

b) the formation of colloidal sulphur (S) causes the occlusion of the reverse osmosis plant membranes; and

c) the sulphides discharge, such as $H_2S$, produces a typical and unpleasant odor, perceived at very low concentration thresholds.

Therefore, there is still the need to provide a process for the treatment of waters containing ammonia aimed to the reuse thereof, allowing to overcome the above mentioned drawbacks.

### Brief description of the Figures

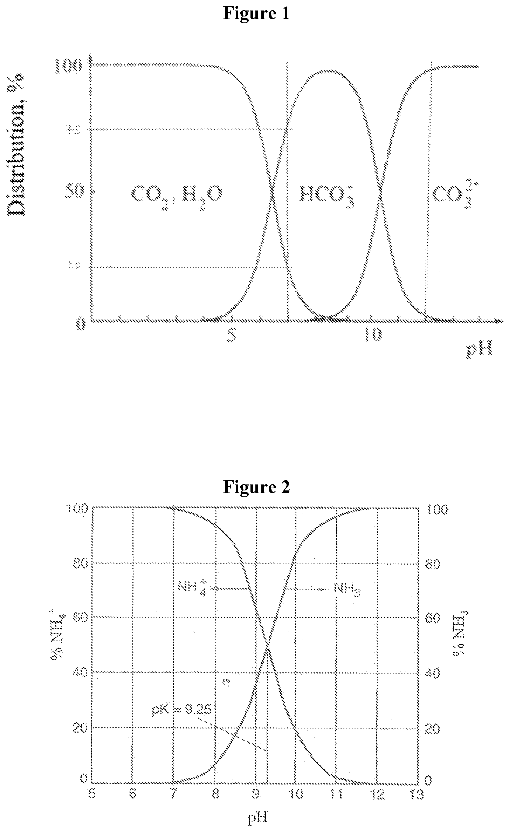

Figure 1 and Figure 2 show the distribution of the species as a function of pH.

### Summary of the Invention

The invention relates to a process for the treatment of water containing ammonia, such as ammonia condensed water, aimed to the reuse thereof, comprising the following steps:

a1) possible cooling of the ammonia condensed water at a basic pH at a temperature equal to or lower than 35 °C; and

b1) adding carbon dioxide ($CO_2$) as acidifying agent to the condensed water to obtain a saline solution;

c1) treating the saline solution obtained directly in step b1) with a reverse osmosis plant.

### Detailed description of the Invention

The industrial productive processes for the preparation of protein hydrolysates, in particular of animal origin, such as a process providing for collagen hydrolyzation, lead to the formation of an aqueous solution containing peptides and amino acids. Such solution is concentrated by water evaporation, leading to the formation of the so-called condensed water.

The condensed water to be treated according to the present invention, hereinafter referred to as ammonia condensed water, may be characterized by an ammonia nitrogen content up to 10,000 ppm, preferably the content ranges between 2,000 ppm and 10,000 ppm, more preferably ranges between 2,000 ppm and 6,000 ppm, and possibly by trace sulphides, for example in an amount ranging up to 500 ppm, preferably ranging between 50 ppm and 500 ppm, more preferably ranging between 50 ppm and 200 ppm, and/or by other pollutants such as phenols.

Object of the present invention is a process for the treatment of waters containing ammonia aimed to the reuse thereof, comprising the steps of:

b1) adding carbon dioxide ($CO_2$) as acidifying agent to the condensed water to obtain a saline solution, characterized by a pH comprised between 7 and 7.5;

c1) treating the saline solution obtained directly in step b1) with a reverse osmosis plant, wherein said treatment consists of one or more subsequent filtration steps by reverse osmosis of the saline solution through an osmotic membrane.

According to the present invention, before step b1) the process may optionally comprise the cooling step a1) of the ammonia condensed water characterized by a basic pH at a temperature equal to or lower than 35 °C.

The temperature in step a1), measured at 1 atm, is equal to or lower than 35 °C, preferably is comprised between 15 and 35 °C, more preferably is comprised between 15 and 25 °C.

Using $CO_2$ as acidifying agent, a (concentrated) ammonium bicarbonate ($NH_4HCO_3$) saline solution at the end of step b1) and step c1) (retentate) of the process is obtained, to be reused in the production process, for example, of a protein hydrolysate.

Using $CO_2$ as acidifying agent has the further advantage that possible calcium ($Ca^{2+}$) and magnesium ($Mg^{2+}$) residues in the condensed waters are broken down by the formation of insoluble carbonates.

According to a preferred aspect of the invention, carbon dioxide ($CO_2$) is added in step b1) under pressure, at a pressure lower than or equal to 4.0 bar, preferably lower than or equal to 3.5 bar, more preferably lower than or equal to 3 bar.

Step c1) of treating the saline solution obtained directly in step b1) with a reverse osmosis plant, consists of performing one or more subsequent steps, preferably two or more, more preferably three or more, of filtration by reverse osmosis of the saline solution through the osmotic membrane to obtain "purified water" according to the invention. The permeate obtained from a first osmosis step is again passed through the osmotic membrane to separate the residual ammonia nitrogen, and so on, until obtaining a permeate, referred to as "purified water" according to the invention, whose residual ammonia nitrogen concentration is equal to or lower than 15 ppm, preferably is equal to 10, more preferably is equal to or lower than 1.5 ppm, even more preferably is equal to or lower than 1 ppm.

According to the present invention, the expression "obtained directly in step b1)" means that the saline solution obtained at the end of step b1) is subjected directly to the treatment with a reverse osmosis plant consisting of one or more subsequent steps, preferably two or more, more preferably three or more, of filtration by reverse osmosis, for example without any intermediate evaporation step.

Advantageously, according to the process of the invention, adjusting the pH between an osmosis step and the subsequent is not necessary.

The process may further comprise an optional step a2) of filtration through activated carbon and/or a subsequent micro- or nano-filtration of the optionally cooled condensed water obtained in step a1).

The process may further comprise a possible step a3) before step b1) of:
a3) adding hydrogen peroxide as oxidizing agent to the ammonia condensed water at a basic pH, optionally obtained at the end of step a1) and/or a2).

The possible oxidative treatment with hydrogen peroxide ($H_2O_2$) of step a3) leads to the oxidation of sulphides ($S^{2-}$), if any, to sulphates ($SO_4^{2-}$).

In fact, step a3) allows the remotion of the sulphides ($S^{2-}$) present in the condensed water using hydrogen peroxide as oxidizing agent, which is easy to use, has low cost, and produces water as a by-product. At pH $\geq 9.2$ the oxidation reaction of the sulphides to sulphates is fast and characterized by yields near to 100%. Due to the basic pH in the condensed water, the complete oxidation of the sulphides to sulphates is obtained as by the reaction scheme below:

$$S^{2-} + 4\ H_2O_2 \rightarrow SO_4^{2-} + 4\ H_2O$$

According to the present invention, the expression "a basic pH" means a pH comprised between 9.0 and 11.0, preferably between 9.5 and 10.5, more preferably pH≈10 or equal to 10.

A further aspect is a process comprising the following steps:

a1) cooling the ammonia condensed water at a basic pH at a temperature equal to or lower than 35 °C; and
a2) filtration through activated carbon and/or a subsequent micro- or nano-filtration of the cooled condensed water obtained in step a1); and
a3) adding hydrogen peroxide as oxidating agent to the condensed water obtained in step a2); and
b1) adding carbon dioxide ($CO_2$) as acidifying agent to the condensed water of step a3) to obtain a saline solution; and
c1) treating the saline solution obtained in step b1) with a reverse osmosis plant.

A further aspect is a process comprising the following steps:

a1) cooling the ammonia condensed water at a basic pH at a temperature equal to or lower than 35 °C; and

a3) adding hydrogen peroxide as oxidating agent to the cooled ammonia condensed water at a basic pH of step a1); and

b1) adding carbon dioxide ($CO_2$) as acidifying agent to the condensed water of step a3) to obtain a saline solution; and

c1) treating the saline solution obtained in step b1) with a reverse osmosis plant.

A further object of the invention is a process comprising the following steps:

a1) cooling the ammonia condensed water at a basic pH at a temperature equal to or lower than 35 °C; and

a2) filtration through activated carbon and/or a subsequent micro- or nano-filtration of the cooled condensed water obtained in step a1); and

b1) adding carbon dioxide ($CO_2$) as acidifying agent to the condensed water of step a2) to obtain a saline solution; and

c1) treating the saline solution obtained in step b1) with a reverse osmosis plant.

According to a further aspect the process relates to the treatment of not cooled, or partially cooled, ammonia condensed water at a temperature comprised between 35 °C and 70 °C, preferably comprised between 35 °C and 65 °C, more preferably equal to 60 °C, comprising the steps of:

a2) possible filtration through activated carbon and/or possible subsequent micro- or nano-filtration of the condensed water; and

a3) possible adding of hydrogen peroxide as oxidating agent to the ammonia condensed water at a basic pH; and

b1) adding carbon dioxide ($CO_2$) as acidifying agent to the condensed water to obtain a saline solution;

c1) treating the saline solution obtained in step b1) with a reverse osmosis plant.

The following Examples further illustrate the invention.

## EXAMPLES

### EXAMPLE 1 - Treatment of ammonia condensed water

The ammonia condensed water ($H_2O^c$) is cooled at room temperature. Once cooled, it is treated with $H_2O_2$ in stoichiometric amount, oxidizing the sulphides ($S^{2-}$) to sulphates ($SO_4^{2-}$), and subsequently acidified with carbon dioxide ($CO_2$) up to a pH of about 7, salifying the present ammonia thus forming ammonium bicarbonate ($NH_4HCO_3$).

Figure 1 and Figure 2 indicate the species distribution as a function of pH.

The thus prepared solution is therefore treated with a reverse osmosis plant. Subsequent steps through the osmotic membrane are performed. The permeate, obtained by a first osmosis step, is again passed through the osmotic membrane. The permeate, obtained by a second osmosis step, is again passed through the osmotic membrane to obtain purified water according to the invention. The $SO_4^{2-}$ ion remains as it is at pH 7.0, therefore it too will be withheld by the osmotic membrane and present in the retentate.

The result of the performed tests show how the concentration of ammonia nitrogen present in solution in the initial condensed water reduces from 1,958 ppm to 1 ppm.

The retentate, *i.e.,* a concentrated $NH_4HCO_3$ saline solution, may be stored to be used in processes as $NH_4HCO_3$ source.

### EXAMPLE 2 - Comparison analysis

In Table 1 the results of the analyses performed on the initial ammonia condensed water ($H_2O^c$) and on the purified water (permeate) are set.

Materials and Methods

- Ammonium ions

The determination of the ammonium cations was performed by the method recommended by the EPA (United States Environmental Protection Agency) (Method n. 300.0), ISO (International Organization for Standardization), and ASTM (APAT/IRSA-CNR Analytic methods for waters 29/2003 Method n. 3030) for the cation determination in drinking and waste waters by ion chromatography. A DIONEX ICS-5000 chromatograph was used. The water soluble sample was weighted with the precision of 1/10000 g and diluted in a volumetric flask in analytical grade water. The samples were filtered on membranes of at least 0.2 $\mu$m, for complex arrays a pre-treatment on C18 cartridges is performed to remove hydrophobic organic substances.

- Total nitrogen

For the determination of the total nitrogen the Kjeldahl method was used, consisting of the determination of the total nitrogen meant as addition of ammonia nitrogen and protein organic nitrogen. By this method, the nitrogen contributes due to inorganic components (nitrates, nitrites) and the organic nitrogen contributes of heterocyclic compounds, compounds containing N-N or N-O bonds, and hydrazine, and hydroxylamine are not determined. The method consists of a first digestion of the sample with sulphuric or phosphosulphuric acid, usually at a temperature of 420 °C. In this way, all the organic material becomes carbon dioxide and evaporating water, and all the protein nitrogen ($-NH_2$) becomes ammonium sulphate (($NH_4)_2SO_4$). To speed up and make the digestion quantitative, allowing the acid to reach 420 °C, a salt mixture (in the form of tablets) is used consisting of an adjuvant (such as $K_2SO_4$, raising the acid boiling temperature) and a catalyst (such as $TiO_2$ or $CuSO_4$). At the end of the digestion, the ammonia is steam distilled prior alkalinization with 32% sodium hydroxide and collected in a boric acid and indicator solution buffered at pH 4.65. The ammonia concentration is therefore determined by titration with 0.1N sulphuric acid by colorimetric or potentiometric detection.

EQUIPMENT:

| Digestion unit | BUCHI KJELDIGESTER K-446 |
| Fume abatement unit | BUCHI SCRUBBER K-415 |
| Distillation unit | BUCHI KJELMASTER K-375 |
| Autosampler unit | BUCHI KJELSAMPLER K-376 |

300 mL Distillation tubes in pyrex glass
Pyrex glass caps for the rack positions without sample

REACTANTS:

**Digestion reactant:** Phosphosulphuric acid RS for Kjeldahl method or 96% concentrated sulphuric acid
**Catalyst:** $TiO_2$ based catalyst (BUCHI 11057980 Kjeldahl Tablets Titanium) or $CuSO_4$ based catalyst (BUCHI 11057982 Kjeldahl Tablets Missouri).
**Scrubber Solution:** 3L of 10% sodium hydroxide, with half spatula of bromothymol blue indicator.
**Alkalinization agent:** 32% Sodium hydroxide.
**Adsorbent solution:** 4% Boric acid solution (40 g/L) (or 2% - 40 g/L) with the addition of 2.5mL/L SHER indicator (BUCHI 003512) and buffered at pH 4.65 with 0.1N NaOH.
**Tritant:** 0.1N sulphuric acid.
**Colorimetric probe storage solution:** 5% aqueous solution EXTRAN MA 02 (Merck 1075532500).
**Potentiometric electrode** storage **solution:** 3M KCl aqueous solution (22.4g/100mL), to be refreshed at each use.

The calculation of the final result is automatically performed by the titrating system. Anyway, the used formula is the following:

$$N\ tot\ \% = \frac{(Vsample - Vblank)\ x\ N}{1000}\ x\ 14\ x\ \frac{100}{Ws}$$

Vsample = 0.1N sulphuric acid mLs used in the sample titration
Vblank = 0.1N sulphuric acid mLs used in the blank titration
N = sulphuric acid normality
Ws = sample weight.

- Sulphides

For the sulphides determination the cuvette test LCK 653 - HACH was used wherein dimethyl-p-phenylenediamine forms with hydrogen sulphides an intermediate component changing in "leuco" blue. This is then oxidized with ferric(III) ions to methylene blue. The coloration is read photometrically.

- Sulphates and chlorides

The anion determination was performed by a separation method, by ionic chromatography, on an anion exchange column. The method is recommended by EPA (Method n. 300.0), ISO and ASTM, for the anion determination in drinking and waste waters by ion chromatography. A DIONEX ICS-5000 chromatograph was used. The water soluble sample was weighted with the precision of 1/10000 g and diluted in a volumetric flask in analytical grade water. The samples were filtered on membranes of at least 0.2 $\mu$m, for complex arrays a pre-treatment on C18 cartridges is performed to remove hydrophobic organic substances.

- Total sulphur

The determination was performed following the EPA Method n. 3052 - Microwave assisted acid digestion of siliceous and organically based matrices - December 1996.

- Chemical Oxygen Demand - COD

For the determination, the test LCK 514 - HACH was used which involves the reaction with a sulphuric acid and potassium dichromate solution plus silver sulphate as catalyst. Chlorides are masked with mercury sulphate. The $Cr^{3+}$ green coloration is read photometrically.

- Conductivity

The determination was performed following the method "Water quality - Determination of electrical conductivity," International Standard - ISO 7888, first edition, 1985-05-15.

Table 1

| Parameter | $H_2O^c$ | Permeate $H_2O_2$ & $CO_2$ |
|---|---|---|
| pH | 10.21 | 6.50 |
| N ($NH_3$) [ppm] | 1,958.04 | 1.15 |
| $N_{Tot}$ [ppm] | 2,480.00 | 1.55 |
| $S^{2-}$ [ppm] | 94.40 | < 0.1 |
| $SO_4^{2-}$ [ppm] | 20.00 | < 0.1 |
| $S_{Tot}$ [ppm] | 136.20 | < 0.25 |
| $Cl^-$ [ppm] | 4.00 | 0.20 |
| COD [ppm] | 905.00 | 103.00 |
| Cond. [uS/cm] | 2,800.00 | 7.67 |

$H_2O^c$ - waters containing ammonia, or ammonia condensed waters

The process of the invention allows to obtain a purified water (permeate) wherein the amount of sulphides ions ($S^{2-}$) reduces from 94.4 ppm to < 0.1 ppm and the amount of ammonia nitrogen [N ($NH_3$)] lowers from 1,958 ppm to 1.15 ppm. Further, the purified water of the invention is characterized by a conductivity ($\gamma$) equal to 7.7 uS/cm.

Due to the process of the invention, reduction values of ammonia nitrogen higher than 99% are reached, as emerges clearly considering the initial ammonia nitrogen values in the waters containing ammonia, or ammonia condensed waters, of 1,958.04 ppm, and the permeate final values, of 1.15 (99.9% reduction).

**Claims**

1. A process for the treatment of waters containing ammonia, or ammoniacal condensate waters, comprising the steps of:

   b1) adding carbon dioxide ($CO_2$) as acidifying agent to the waters containing ammonia, or ammoniacal condensate waters, to obtain a saline solution **characterized by** a pH comprised between 7 and 7.5;
   c1) treating the saline solution directly obtained in step b1) with a reverse osmosis plant, wherein said treatment consists of one or more subsequent filtration steps by reverse osmosis of the saline solution through an osmotic membrane.

2. A process according to claim 1, further comprising a cooling step a1) at a temperature equal to or lower than 35 °C of the waters containing ammonia, or ammoniacal condensate waters, at a basic pH before step b1).

3. A process according to claim 1 or 2, further comprising a filtration step a2) through activated carbon and/or a subsequent micro- or nano-filtration of the waters containing ammonia, or ammoniacal condensate waters, before step b1) or of the cooled waters containing ammonia, or ammoniacal condensate waters, obtained in step a1).

4. A process according to claims 1-3, further comprising an adding step a3) of hydrogen peroxide as oxidating agent to the waters containing ammonia, or ammoniacal condensate waters, before step b1) or to the cooled waters containing ammonia, or ammoniacal condensate waters, obtained in step a1) or to the filtered water obtained in step a2).

5. A process according to claims 1-4, wherein the waters containing ammonia, or ammoniacal condensate waters, are **characterized by** an ammonia nitrogen content up to 10,000 ppm, preferably comprised between 2,000 ppm and 10,000 ppm, more preferably between 2,000 ppm and 6,000 ppm.

6. A process according to claims 1-5, wherein the waters containing ammonia, or ammoniacal condensate waters, are **characterized by** a content of trace sulphides up to 500 ppm, preferably comprised between 50 ppm and 500 ppm, more preferably comprised between 50 ppm and 200 ppm.

7. A process according to claims 1-6, wherein the basic pH is comprised between 9.0 and 11.0, preferably between 9.5 and 10.5, more preferably pH≈10 or equal to 10.

8. A process according to claims 1-7, wherein carbon dioxide ($CO_2$) is added in step b1) at a pressure lower than or equal to 4.0 bar, preferably lower than or equal to 3.5 bar, more preferably lower than or equal to 3 bar.

9. A process according to claims 1-8, wherein in step c1) two or more, preferably three or more, subsequent filtration steps by reverse osmosis of the saline solution through the osmotic membrane are performed.

10. A process according to claims 1-9, wherein the residual ammonia concentration in the purified water is equal to or lower than 15 ppm, preferably is 10 ppm, more preferably is equal to or lower than 1.5 ppm, even more preferably is equal to or lower than 1 ppm.


**Patentansprüche**

1. Verfahren zur Behandlung von ammoniakhaltigen Wässern oder ammoniakhaltigen Kondensatwässern, umfassend die folgenden Schritte:

   b1) Zusetzen von Kohlendioxid ($CO_2$) als Säuerungsmittel zu den ammoniakhaltigen Wässern oder ammoniakhaltigen Kondensatwässern, um eine Salzlösung mit einem pH-Wert zwischen 7 und 7,5 zu erhalten;
   c1) Behandeln der in Schritt bl) direkt erhaltenen Salzlösung mit einer Umkehrosmoseanlage, wobei die Behandlung aus einem oder mehreren aufeinanderfolgenden Filtrationsschritten durch Umkehrosmose der Salzlösung durch eine osmotische Membran besteht.

2. Verfahren nach Anspruch 1, das ferner einen Kühlschritt al) bei einer Temperatur von höchstens 35°C der ammoniakhaltigen Wässer oder ammoniakhaltigen Kondensatwässer bei einem basischen pH-Wert vor Schritt b1) umfasst.

**3.** Verfahren nach Anspruch 1 oder 2, das ferner einen Filtrationsschritt a2) durch Aktivkohle und/oder eine anschließende Mikro- oder Nanofiltration der ammoniakhaltigen Wässer oder ammoniakhaltigen Kondensatwässer vor Schritt b1) oder der gekühlten ammoniakhaltigen Wässer oder ammoniakhaltigen Kondensatwässer, die in Schritt al) erhalten wurden, umfasst.

**4.** Verfahren nach den Ansprüchen 1 bis 3, das ferner einen Schritt a3) des Zugabens von Wasserstoffperoxid als Oxidationsmittel zu den ammoniakhaltigen Wässern oder ammoniakhaltigen Kondensatwässern vor Schritt b1) oder zu den gekühlten ammoniakhaltigen Wässern oder ammoniakhaltigen Kondensatwässern, die in Schritt al) erhalten wurden, oder zu dem in Schritt a2) erhaltenen gefilterten Wasser umfasst.

**5.** Verfahren nach den Ansprüchen 1 bis 4, wobei die ammoniakhaltigen Wässer oder ammoniakhaltigen Kondensate durch einen Ammoniakstickstoffgehalt von bis zu 10.000 ppm, vorzugsweise zwischen 2.000 ppm und 10.000 ppm, noch bevorzugter zwischen 2.000 ppm und 6.000 ppm gekennzeichnet sind.

**6.** Verfahren nach den Ansprüchen 1 bis 5, wobei die ammoniakhaltigen Wässer oder ammoniakhaltigen Kondensatwässer durch einen Gehalt an Sulfidspuren von bis zu 500 ppm, vorzugsweise zwischen 50 ppm und 500 ppm, noch bevorzugter zwischen 50 ppm und 200 ppm gekennzeichnet sind.

**7.** Verfahren nach den Ansprüchen 1 bis 6, wobei der basische pH-Wert zwischen 9,0 und 11,0, vorzugsweise zwischen 9,5 und 10,5, vorzugsweise pH≈10 oder gleich 10 liegt.

**8.** Verfahren nach den Ansprüchen 1 bis 7, wobei Kohlendioxid ($CO_2$) in Schritt b1) bei einem Druck von weniger als oder gleich 4,0 bar, vorzugsweise weniger als oder gleich 3,5 bar, noch bevorzugter weniger als oder gleich 3 bar zugegeben wird.

**9.** Verfahren nach den Ansprüchen 1 bis 8, wobei in Schritt c1) zwei oder mehr, vorzugsweise drei oder mehr aufeinanderfolgende Filtrationsschritte durch Umkehrosmose der Salzlösung durch die osmotische Membran durchgeführt werden.

**10.** Verfahren nach den Ansprüchen 1 bis 9, wobei die Restammoniakkonzentration im gereinigten Wasser gleich oder kleiner als 15 ppm, vorzugsweise 10 ppm, noch bevorzugter gleich oder kleiner als 1,5 ppm, noch bevorzugter gleich oder kleiner als 1 ppm ist.

**Revendications**

**1.** Procédé de traitement d'eaux contenant de l'ammoniac, ou d'eaux de condensation ammoniacales, comprenant les étapes de :

b1) ajout de dioxyde de carbone ($CO_2$) comme agent acidifiant aux eaux contenant de l'ammoniac ou aux eaux de condensation ammoniacales, afin d'obtenir une solution saline **caractérisée par** un pH compris entre 7 et 7,5 ; c1) traitement de la solution saline obtenue directement à l'étape b1) par une installation d'osmose inverse, dans lequel ledit traitement consiste en une ou plusieurs étapes ultérieures de filtration par osmose inverse de la solution saline à travers une membrane osmotique.

**2.** Procédé selon la revendication 1, comprenant en outre une étape de refroidissement a1) à une température inférieure ou égale à 35 °C des eaux contenant de l'ammoniac ou des eaux de condensation ammoniacales, à un pH basique avant l'étape b1).

**3.** Procédé selon la revendication 1 ou 2, comprenant en outre une étape de filtration a2) sur du charbon actif et/ou une micro- ou nanofiltration ultérieure des eaux contenant de l'ammoniac ou des eaux de condensation ammoniacales, avant l'étape b1) ou des eaux contenant de l'ammoniac ou des eaux de condensation ammoniacales refroidies, obtenues à l'étape a1).

**4.** Procédé selon les revendications 1 à 3, comprenant en outre une étape d'ajout a3), de peroxyde d'hydrogène comme agent oxydant aux eaux contenant de l'ammoniac ou aux eaux de condensation ammoniacales, avant l'étape b1), ou aux eaux contenant de l'ammoniac ou aux eaux de condensation ammoniacales refroidies, obtenues à l'étape a1) ou à l'eau filtrée obtenue à l'étape a2).

5. Procédé selon les revendications 1 à 4, dans lequel les eaux contenant de l'ammoniac ou les eaux de condensation ammoniacales, sont **caractérisées par** une teneur en azote ammoniacal pouvant atteindre 10 000 ppm, de préférence comprise entre 2 000ppm, et 10 000 ppm, et plus préférablement entre 2 000 ppm et 6 000 ppm.

6. Procédé selon les revendications 1 à 5, dans lequel les eaux contenant de l'ammoniac ou les eaux de condensation ammoniacales, sont **caractérisées par** une teneur en traces de sulfures pouvant atteindre 500 ppm, de préférence comprise entre 50 ppm et 500 ppm, et plus préférablement comprise entre 50 ppm et 200 ppm.

7. Procédé selon les revendications 1 à 6, dans lequel le pH basique est compris entre 9,0 et 11,0, de préférence entre 9,5 et 10,5, plus préférablement le pH ≈ 10 ou égal à 10.

8. Procédé selon les revendications 1 à 7, dans lequel du dioxyde de carbone ($CO_2$) est ajouté à l'étape b1) à une pression inférieure ou égale à 4,0 bars, de préférence inférieure ou égale à 3,5 bars, plus préférablement inférieure ou égale à 3 bars.

9. Procédé selon les revendications 1 à 8, dans lequel à l'étape c1) deux ou plus, de préférence trois ou plus, étapes de filtration ultérieures par osmose inverse de la solution saline à travers la membrane osmotique sont réalisées.

10. Procédé selon les revendications 1 à 9, dans lequel la concentration d'ammoniac résiduel dans l'eau purifiée est égale ou inférieure à 15 ppm, est de préférence de 10 ppm, plus préférablement est égale ou inférieure à 1,5 ppm, encore plus préférablement est égale ou inférieure à 1 ppm.

**Figure 1**

**Figure 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020146941 A1

### Non-patent literature cited in the description

- Microwave assisted acid digestion of siliceous and organically based matrices. *EPA Method n. 3052*, December 1996

- Water quality - Determination of electrical conductivity. International Standard - ISO 7888. 15 May 1985